# EUROPÄISCHE PATENTSCHRIFT

(11) **EP 1 709 086 B1**
(45) Veröffentlichungstag und Bekanntmachung des Hinweises auf die Patenterteilung: **25.04.2018**
(21) Anmeldenummer: 05700733.8
(22) Anmeldetag: 07.01.2005
(51) Int. Cl.: C08F 8/04, C08C 19/02, C08F 36/04, C08C 1/00, B01J 35/00, B01J 37/16, C08F 236/06, C08F 236/12, B01J 23/755, C08C 1/04, C08C 1/14

(54) **VERFAHREN ZUR HYDRIERUNG VON DOPPELBINDUNGEN-ENTHALTENDEN, UNGESÄTTIGTEN POLYMEREN**
METHOD FOR THE HYDROGENATION OF UNSATURATED POLYMERS CONTAINING DOUBLE BONDS
PROCÉDÉ D'HYDROGÉNATION DE POLYMÈRES INSATURÉS CONTENANT DES DOUBLES LIAISONS

(30) Priorität: 17.01.2004 DE 102004002576
(43) Veröffentlichungstag der Anmeldung: 11.10.2006
(73) Patentinhaber: ARLANXEO Deutschland GmbH, 41540 Dormagen (DE)
(72) Erfinder: WEISS, Thomas, 68259 Mannheim-Freudenheim (DE); CREUTZ, Karin, 40764 Langenfeld (DE)
(74) Vertreter: Wichmann, Birgid
(86) Internationale Anmeldenummer: PCT/EP2005/000075
(87) Internationale Veröffentlichungsnummer: WO 2005/068512

(56) Entgegenhaltungen:
- EP-A- 1 454 924
- PATENT ABSTRACTS OF JAPAN Bd. 1995, Nr. 01, 28. Februar 1995 (1995-02-28) -& JP 06 287219 A (NIPPON ZEON CO LTD), 11. Oktober 1994 (1994-10-11)
- PATENT ABSTRACTS OF JAPAN Bd. 007, Nr. 069 (C-158), 23. März 1983 (1983-03-23) & JP 58 005304 A (ASAHI KASEI KOGYO KK), 12. Januar 1983 (1983-01-12)
- MAYER ANDREA B R ET AL: "Platinum nanocatalysts immobilized on latex supports" J POLYM SCI PART B; JOURNAL OF POLYMER SCIENCE, PART B: POLYMER PHYSICS JUN 1997 JOHN WILEY & SONS INC, NEW YORK, NY, USA, Bd. 35, Nr. 8, Juni 1997 (1997-06), Seiten 1207-1216, XP002327349
- NAKAO, YUKIMICHI ET AL: "Colloidal nickel boride catalyst for hydrogenation of olefins" JOURNAL OF CATALYSIS , 68(2), 406-10 CODEN: JCTLA5; ISSN: 0021-9517, 1981, XP009047382

## Beschreibung

Die vorliegende Erfindung betrifft ein Verfahren zur Hydrierung von Doppelbindungen-enthaltenden, ungesättigten Polymeren, wobei das in Latex-Form vorliegende ungesättigte Polymere in Gegenwart eines metallhaltigen Kolloids hydriert wird.

Die Hydrierung von ungesättigten Polymeren, beispielsweise von ungesättigten Elastomeren wie Acrylnitril/Butadien-Copolymere (NBR), zu entsprechenden voll- oder teilhydrierten Polymeren ist bekannt.

Beispielsweise werden Copolymere aus Butadien und Acrylnitril in großtechnischen Verfahren zu entsprechenden hydrierten Produkten hydriert, wobei die erhaltenen teil- oder vollständig hydrierten Copolymere auf Basis von Butadien und Acrylnitril eine verbesserte Alterungsbeständigkeit, Ozonbeständigkeit sowie ein niedriges Quellvermögen aufweisen.

Eine Variante zur kommerziellen Hydrierung von ungesättigten Polymeren, wie NBR, besteht darin, dass man den z.B. durch Emulsionspolymerisation anfallenden NBR-Latex koaguliert und vom Serum abtrennt. Anschließend wird der NBR-Kautschuk in mehreren Verfahrensschritten getrocknet, in einem organischen Lösungsmittel gelöst und mit Hilfe von homogenen oder heterogenen Hydrierkatalysatoren (teil)hydriert. Dabei kommen z.B. Wilkinsonkatalysatoren auf Basis von Ruthenium oder Rhodium in Betracht, mit denen eine homogene Katalyse durchgeführt wird, oder heterogene Katalysatoren, z.B. auf Basis von Palladium/Kohle.

Diese Verfahrensweise hat jedoch den Nachteil, dass der erhaltene ungesättigte Kautschuk in einem separaten Verfahrensschritt in einem organischen Lösungsmittel wieder gelöst werden muss, damit anschließend die Hydrierung durchgeführt werden kann.

Eine andere Variante zur Hydrierung von ungesättigten Polymeren, z.B. Elastomeren, besteht darin, dass man das ungesättigte Polymere in Latex-Form direkt hydriert, ohne dass man den zugrundeliegenden Kautschuk zunächst isoliert und erneut für die Hydrierung in einem organischen Lösungsmittel löst.

Diese Verfahrensweise ist beispielsweise beschrieben in WO 00/09576 und WO 01/55223. Nachteilig bei dieser Verfahrensweise ist jedoch, dass die Hydrierung in Gegenwart von Hydrazin oder Hydrazin-liefernden Verbindungen und in Gegenwart eines Oxidationsmittels, wie Wasserstoffperoxid, sowie in Anwesenheit bestimmter Additive durchgeführt wird. Da das Arbeiten mit Hydrazin in Gegenwart eines Oxidationsmittels bestimmte sicherheitstechnische Vorkehrungen erfordert, ist die beschriebene Hydrierreaktion mit einem höheren apparativen Aufwand verbunden, was zu Lasten der Wirtschaftlichkeit geht. Darüber hinaus benötigt die Hydrierung Hydrazine und ein Oxidationsmittel. Bei dieser Reaktion kommt es zur Gelbildung. Zur Vermeidung bzw. Reduzierung der Gelbildung sind jedoch zusätzliche Verfahrensmaßnahmen erforderlich, was ebenfalls zu Lasten der Wirtschaftlichkeit geht.
Weiterhin ist bekannt, ungesättigte Polymere in Latex-Form in Gegenwart eines wasserlöslichen Wilkinsonkatalysators zu hydrieren. Auch dieses Verfahren hat den Nachteil, dass eine gewisse Vergelung des erhaltenen hydrierten Polymers eintritt, was zu einer Qualitätseinbuße des hydrierten Produktes führt (vgl. z.B. Synthetic Rubber Industry, 2002, 25 (5), 311; Rubber Chemistry and Technology, 1995, 68(2), 282 und US 6084033). WO-A-03/029307 offenbart ein Verfahren zur Hydrierung konjugierter Dienpolymeren die in Latex-Form sein können, worin die konjugierten Dienpolymere in Anwesenheit eines ein Platingruppenmetall enthaltenden Katalysators und einer basischen Verbindung hydriert werden. Aufgabe der vorliegenden Erfindung ist es daher, ein wirtschaftliches Verfahren zur Hydrierung von ungesättigten Polymeren zur Verfügung zu stellen, das in technisch einfacher Weise durchgeführt werden kann, verbunden mit einer guten Produktqualität des hydrierten bzw. teilhydrierten Polymeren.
Gegenstand der vorliegenden Erfindung ist ein Verfahren zur Hydrierung von Doppelbindungen-enthaltenden, ungesättigten Polymeren, das dadurch gekenntzeichnet ist, dass man zunächst in Gegenwart eines in Latex-Form vorliegenden ungesättigten Polymeren ein metallhaltiges Kolloid unter reduzierenden Bedingungen herstellt, anschließend das erhaltene kolloidhaltige Latex-Gemisch hydriert, danach das metallhaltige Kolloid vom Latex abtrennt und den erhaltenen Latex des Polymeren isoliert, wobei der pH-Wert bei der Herstellung des metallhaltigen Kolloids im Bereich 3 bis 6 liegt. Als Doppelbindungen-enthaltende, ungesättigte Polymere, die nach dem erfindungsgemäßen Verfahren hydriert werden können, kommen beispielsweise solche in Betracht, die aufgebaut sind aus konjugierten Dienen (Homopolymerisate) oder aufgebaut sind aus 1 bis 5 Gew.% an konjugierten Dienen und 95 bis 99 Gew.-% an ungesättigten, Vinylgruppen-enthaltenden Monomeren (Copolymerisate). Als Beispiele für konjugierte Diene werden genannt: 1,3-Butadien, 2,3-Dimethylbutadien, Isopren und 1,3-Pentadien. Spezifische Beispiele für ungesättigte Vinylgruppen-enthaltende Monomere sind z.B. Nitrilverbindungen, wie Acrylnitril und Methacrylnitril, Vinylgruppen-enthaltende aromatische Verbindungen, wie Styrol, o-, m-, p-Alkylstyrole, wie Methylstyrole, sowie Divinylbenzol. Darüber hinaus sind zu nennen aromatische Dialkenylverbindungen, wie Diisopropenylbenzol, ungesättigte Carbonsäure und Carbonsäureester, wie Acrylsäure, Methacrylsäure, Crotonsäure, Maleinsäure, Methylacrylat, Ethylacrylat, Butylacrylat, 2-Ethylhexylacrylat und Methylmethacrylat, Vinylpyridin und Vinylester, wie Vinylacetat.
Als bevorzugt zu nennende, ungesättigte Polymere sind Polybutadien, Polyisopren, Styrol-Butadiencopolymere (SBR), Acrylnitril-Butadiencopolymere (NBR), Naturkautschuk, Butadien-Isoprenkautschuk und Terpolymere aus Butadien, Acrylnitril und Butylacrylat oder Acrylsäure. Ganz besonders bevorzugt sind Acrylnitril-Butadiencopolymere (NBR).
Wie erwähnt, werden die ungesättigten Polymere in Latex-Form hydriert. Die Herstellung entsprechender Latexe der oben erwähnten ungesättigten Polymere ist dem Fachmann allgemein bekannt. Die Latex-Form des entsprechenden ungesättigten Polymeren stellt eine wässrige Emulsion des Polymers dar, die die bekannten Latex-Additive enthalten kann, wie Emulgatoren und Stabilisatoren, in den bekannten und üblichen Mengen.

Bei dem erfindungsgemäßen Verfahren beträgt die Konzentration des zu hydrierenden Polymer-Latex etwa 1 bis 50 Gew.-%, bevorzugt 10 bis 30 Gew.-%, bezogen auf die wässrige Emulsion. Wie vorstehend beschrieben, ist es für das erfindungsgemäße Verfahren von Bedeutung, dass man in Gegenwart eines in Latex-Form vorliegenden ungesättigten Polymeren ein metallhaltiges Kolloid herstellt und anschließend das erhaltene kolloidhaltige Latex-Gemisch hydriert.
Man geht dabei so vor, dass man in Gegenwart des Polymer-Latex ein Metallsalz oder einen Metallkomplex reduktiv in ein metallhaltiges Kolloid überführt, gegebenenfalls unter Mitverwendung von oberflächenwirksamen Substanzen, wie Tensiden, oder auch unter Verwendung von kolloidstabilisierten Substanzen, wie Polyvinylpyrrolidon.
Als einzusetzende Tenside sind beispielsweise zu erwähnen Amphiphile Betaine (A), wie 3-N,N(Dimethyldodecylamino)-propansulfonat, kationische Tenside (B), Fettalkohol-Polyglykolether (C), Polyoxyethylen-Kohlenhydrat-Fettalkylester (D), anionische Tenside (E), wie Arylalkylsulfonsäuren bzw. Alkylsulfonsäuren und deren Natriumsalze, sowie langkettige Alkylsulfate, wie Natriumdodecylsulfat und Alkalisalze gesättigter und ungesättigter Fettsäuren aber auch amphiphile Zuckertenside (F).
Die kolloidstabilisierenden Substanzen bzw. die Tenside können in Mengen von ca. 1 bis 10 Gew.-%, bezogen auf den Festkautschuk eingesetzt werden, wobei auch Tensidgemische zum Einsatz kommen können.
Ein vorteilhafte Variante besteht darin, dass man zunächst das Metallsalz bzw. den Metallkomplex in Wasser löst und unter Verwendung von entsprechenden oberflächenwirksamen Substanzen bzw. kolloidstabilisierenden Substanzen die wässrige Lösung in den vorhandenen Latex des ungesättigten Polymeren einträgt und anschließend Reduktionsmittel zugibt. Der Eintrag der wässrigen Lösung des Metallsalzes bzw. Metallkomplexes in den Latex erfolgt üblicherweise bei Temperaturen von etwa 20 bis 70°C, vorzugsweise bei 20 bis 30°C.
Damit eine Koagulation des Latex bei der Herstellung des metallhaltigen Kolloids vermieden wird, ist es wichtig, dass in einem bestimmten pH-Bereich gearbeitet wird. Vorteilhaft ist ein pH-Bereich von ca. 3 bis 6, bevorzugt von 4,5 bis 5.
Als Metallsalze oder Metallkomplexe können solche eingesetzt werden, die auf Metalle der Gruppe VIIIB des Periodensystems der Elemente beruhen, insbesondere auf die Metalle der Gruppe 10 (IUPAC) sowie auch auf Metalle wie Ruthenium oder Rhodium. Die Metallsalze oder die Metallkomplexe können auch im Gemisch untereinander eingesetzt werden.
Die eingesetzten Metallsalze können durch folgende allgemeine Formel wiedergegeben werden:

Mⁿ⁺(A)ₘ,

worin
- M: Metalle der Nebengruppe Gruppe VIIIB (nach Mendelejew) sind, insbesondere die Metalle der Gruppe 10 (IUPAC) sowie Rhodium und Ruthenium. Besonders bevorzugt sind Ni, Pd, Rh und Ru, ganz besonders bevorzugt ist Ni,
- A: ein organisches oder anorganisches Anion bedeutet, insbesondere aus der Gruppe R-COO- mit R = Wasserstoff, Methyl, Ethyl, Propyl, Halogene, wie F, Cl, Br, J, komplexe Anionen, wie NO₃⁻, SO₄²⁻, ClO₄⁻, BF₄⁻, PF₆⁻, CN⁻ und
- m, n: als Variablen so gewählt sind, dass unter Berücksichtigung der ionischen Ladungen eine neutrale Verbindung entsteht.
Die metallhaltigen Alkalisalze oder Säuren enthalten komplexe Anionen entsprechend der Formel

[Mⁿ⁺(A)ₘ]^{k-},

worin
- M: Metalle der Nebengruppe Gruppe VIIIB sind, insbesondere die Metalle der Gruppe 10 sowie Rhodium und Ruthenium. Ganz besonders bevorzugt sind Ni, Pd, Pt, Rh und Ru, insbesondere Ni,
- A: ein organisches oder anorganisches Anion bedeutet, insbesondere aus der Gruppe R-COO- mit R = Wasserstoff, Methyl, Ethyl, Propyl, Halogene, wie F, Cl, Br, J, komplexe Anionen, wie NO₃⁻. SO₄²⁻, ClO₄⁻, BF₄⁻, PF₆⁻, CN⁻ und
- m, n, k: als Variablen so gewählt sind, dass unter Berücksichtigung der ionischen Ladungen metallhaltige komplexe Anionen entstehen
Optional können noch weitere neutrale Donoren, wie Hydratwasser, in den metallhaltigen Salzen vorhanden sein.
Besonders bevorzugt sind folgende Metallsalze bzw. Metallkomplexe zu nennen:
Kobaltchlorid, Kobaltnitrat, Kobaltbromid, Kobaltperchlorat, Kobaltcarboxylate, Kobaltformiat, Kobaltdioctanoat, Kobaltsulfat, Kobaltalkylsulfonate, Kobalthexaamindichlorid, Nickelchlorid, Nickelnitrat, Nickelbromid, Nickelperchlorat, Nickelcarboxylate, Nickelformiat, Nickeldioctanoat Nickelsulfat, Nickelalkylsulfonate, Nickelhexaammindichlorid, Rhodiumtribromid, Rhodiumtrichlorid, Rhodiumchloropentaaminchlorid, Rutheniumtribromid, Rutheniumtrichlorid, Ruthenium(II)hexaaminchlorid, Ruthenium(III)hexaaminchlorid, Ruthenium(III)chloro-pentaaminchlorid, Palladiumdichlorid, Hexachlorpalladiumsäure, Hexachlorplatinsäure, Natriumhexachloropalladat, Natriumhexachloroplatinat, Natriumtetrachloropalladat, Natriumtetrachloroplatinat, Platintetraamintetrachloroplatinat, Palladium-tetraamintetrachloropalladat, ganz besonders bevorzugt Hexachlorplatinsäure, Hexachloropalladiumsäure, Natriumtetrachloroplatinat, Natriumtetrachloropalladat, Palladiumdichlorid, Nickelchlorid. Die Metallsalze bzw. Metallkomplexe können sowohl einzeln als auch in beliebigen Mischung voneinander eingesetzt werden.
Üblicherweise werden die Metallsalze bzw. Metallkomplexe in Mengen von 0,01 g bis 5 g, bevorzugt 0,1 bis 1,0 g, bezogen auf 5 g Festkautschuk, eingesetzt.
Bei dem erfindungsgemäßen Verfahren werden die eingesetzten Metallsalze bzw. Metallkomplexe in Gegenwart des vorhandenen Polymer-Latex reduktiv in ein metallhaltiges Kolloid bei Temperaturen im Bereich von etwa 20 bis 100°C, bevorzugt 20 bis 70°C überführt.
Als Reduktionsmittel eignen sich beispielsweise Wasserstoff, komplexe Hydride, besonders Natriumhydrid, reduktiv wirkende anorganische Verbindungen, wie Hydrazin und Hydrazin-Hydrate, Hydroxylamine und deren Salze, besonders aber Hydrazin und seine Salze. Darüber hinaus können als Reduktionsmittel organische Verbindungen, wie Aldehyde und/oder Alkohole, bevorzugt Acetaldehyd, Formaldehyd, Ethylalkohol und/oder Methylalkohol eingesetzt werden. Zu nennen sind aber auch Alkaliformiate. Darüber hinaus können feinverteilte, unedle Metalle, wie Zinkpulver, die Reduktion der edleren Metalle zu stabilen Kolloiden in Gegenwart von kolloidstabilisierenden Substanzen bewirken. Auch die kolloidstabilisierenden Substanzen, beispielsweise Polyvinylpyrrolidin oder Poly(N-Vinylpyrrolidoncomethacrylsäure-2-dimethylaminoethylester), gelten selbst als Reduktionsmittel.

Besonders bevorzugt sind als Reduktionsmittel zu nennen: Wasserstoff, komplexe Hydride, wie NaBH₄, Hydroxylammoniumhydrochlorid, Hydrazin und Hydrazinhydrat, Formaldehyd und Acetaldehyd, Ameisensäure sowie Natriumformiat, Zinkpulver, insbesondere Wasserstoff, Natriumborhydrid und Hydrazinhydrat. Die Reduktionsmittel können auch in beliebigen Mischungen untereinander eingesetzt werden.

Es ist auch möglich, die Zugabe des Reduktionsmittels in Gegenwart einer bereits vorhandenen Wasserstoffsatmosphäre zu bewerkstelligen.

Nachdem ein entsprechendes Gemisch aus Polymerlatex und metallhaltigem Kolloid hergestellt worden ist, erfolgt die Hydrierung des ungesättigten Polymeren. Die Hydrierung wird dabei bei Wasserstoffdrucken im Bereich von etwa 0,1 bis 100 bar, bevorzugt 1 bis 50 bar, ganz besonders bevorzugt bei 1 bis 15 bar durchgeführt. Die Hydriertemperaturen liegen üblicherweise im Bereich von etwa 25 bis 100°C, vorzugsweise 25 bis 70°C.

Nach erfolgter Hydrierung wird das Metall aus dem Reaktionsgemisch entfernt. Dies geschieht durch Abkühlen des Reaktionsgemisches auf etwa 20 bis 30°C durch Zugabe eines Komplexbildners unter oxidativen Bedingungen und anschließender Koagulation des Latex. Dabei verbleibt das Metall als Metallsalz im Serum.

Als Komplexbildner kommen insbesondere solche Substanzen in Frage, die die Oxidation des niedervalenten Metalls besonders effektiv durch starke Komplexbildung mit dem entstehenden Metallion unterstützen. Besonders wirksam sind die Oxidation unterstützenden wasserlöslichen Komplexbildner, wie mehrwertige Hydroxycarbonsäuren, Phosphorsäuren oder Amine oder Gemische der genannten Komplexbildner. Die Komplexbildner werden dabei üblicherweise in Mengen von etwa 0,01 g bis 5 g, bevorzugt 0,1 bis 1,0 g, bezogen auf 5 g Festkautschuk eingesetzt.

Bevorzugt werden als Komplexbildner eingesetzt: EDTA-Alkalisalze, Milchsäure, Zuckersäuren, wie z.B. Glucuronsäure, Zitronensäure, Weinsäure, Ascorbinsäure, Phosphorsäure, oder komplexierende Anionen, wie SCN⁻, CN⁻, F⁻, einzeln oder in beliebigen Mischungen untereinander.

Als Oxidationsmittel eignen sich bevorzugt gasförmige Oxidationsmittel, insbesondere (Luft)-sauerstoff. Selbstverständlich können auch andere Oxidationsmittel eingesetzt werden, wenn diese den vorhandenen Polymerlatex nicht verändern bzw. beschädigen. Beispielsweise kann auch verdünnte Salpetersäure als Oxidationsmittel eingesetzt werden.

Neben einer chemischen Abtrennung sind auch physikalische Methoden zur Abtrennung des Metalls aus dem Polymerlatex denkbar. Zu erwähnen sind dabei elektrochemische Verfahren, die Verwendung von Zentrifugen, um das spezifisch schwere Metallkolloid vom Polymerlatex abzutrennen. Besonders geeignet sind alle Verfahren, die das metallhaltige Kolloid in die wässrige Phase überführen können, z.B. durch wasserlösliche Komplexbildner oder durch selektive Adsorbentien, wie sulfonierte Triphenylphosphane, Kronenethern und/oder Ionenaustauscherharzen.

Nach der Entfernung des Metalls aus dem hydrierten Polymerlatex, wird der Latex des hydrierten Produktes in üblicher Weise isoliert, wie z.B. durch Koagulation mittels Ethanolzugabe, Zugabe von Magnesiumsalzen oder durch Abkühlung.

Selbstverständlich ist es auch möglich, den Latex in bekannter Art und Weise zu fällen und das gefällte Polymere aus der wässrigen Phase durch beispielsweise Filtration abzutrennen.

Nach dem erfindungsgemäßen Verfahren werden hydrierte oder teilhydrierte Polymere erhalten, wobei etwa 1 bis 99 %, bevorzugt 10 bis 60 %, der ursprünglich vorhandenen Doppelbindungen hydriert werden. Der Hydriergrad liegt also bei ca. 1 bis 99 % der Theorie, bevorzugt bei 10 bis 60%.

### Beispiele

### Beispiel 1.1: Herstellung eines Nickelkolloids in Gegenwart von NBR-Latex (pH5)

NiCl₂·6H₂O (0,126 g, 0,53 mmol) wurde mit dem Alkylsulfonat Mersolat® 30 (0,36 g) in 10 ml sauerstofffreies und mit Argon beladenes Wasser (10 ml) gelöst. Dann wurde Poly(N-Vinylpyrrolidoncomethacrylsäure2-dimethylaminoethylester) als Lösung zugegeben (0,5 g; 19 Gew.-% in Wasser). Diese Mischung wurde tropfenweise unter Rühren mit dem Latex (20 ml, 19.27 Gew.-% Perbunan® NT 3445 VP, AN-Gehalt 24 Gew.%, pH 5 (HCl), ca. 5 Gew.-% Mersolat, bezogen auf Festkautschuk vermischt. Anschließend wurde die NaBH₄-Lösung (0,12 g in 5 ml Wasser) tropfenweise zugegeben. Bei der Reaktion bildete sich sofort elementares Nickel und eine starke Aufschäumung war zu beobachten. (Diese kann durch vorherige Zugabe von Siliconöl (2 Tropfen) zum Latex vermindert werden.) Nach ca. 1 h war die gesamte Menge an NaBH₄ zugegeben und es wurde ein grauschwarz gefärbter Latex erhalten, der sofort zur Hydrierung verwendet wurde.

### Beispiel 1.2 (Vergleich): Herstellung eines Nickelkolloids in Gegenwart von NBR-Latex (pH 14)

NiCl₂·6H2O (0,126 g, 0,53 mmol) wurde mit dem Alkylsulfonat Mersolat® 30 (0,36 g) in 10 ml sauerstofffreies und mit Argon beladenes Wasser (10 ml) gelöst. Dann wurde Poly(N-Vinylpyrrolidoncomethacrylsäure2-dimethylaminoethylester) als Lösung zugegeben (0,5 g; 19 Gew.-% in Wasser). Diese Mischung wurde tropfenweise unter Rühren zu einer Mischung einer NaBH₄-Lösung (0,12 g in 5 ml Wasser) mit dem Latex (20 ml, 19.27 Gew.-% Perbunam® NT 3445 VP, AN-Gehalt 24 Gew.-%, pH 14, ca. 1 Gew % Mersolat, bezogen auf Festkautschuk) zugegeben. Bei der Reaktion bildete sich sofort elementares Nickel und eine starke Aufschäumung war zu beobachten. (Diese kann durch vorherige Zugabe von Siliconöl (2 Tropfen) zum Latex vermindert werden.) Nach ca. 1 h war die gesamte Menge an NiCl₂ zugegeben und es wurde ein grauschwarz gefärbter Latex erhalten, der sofort zur Hydrierung verwendet wurde.

### Beispiel 2: Durchführung der Hydrierung

Hierzu kam ein beheizbarer 0,3 Liter Reaktor H 5347 aus Hastelloy C4, zugelassen auf 50 bar (Betriebsdruck max. 300 bar bei 300°C), mit einem magnetgekoppelten Blattrührer zum Einsatz. Der saubere Reaktor wurde im Vakuum 3h bei 100°C getrocknet und abkühlt, mit 20 bar Stickstoff auf Dichtigkeit geprüfen und erneut evakuiert.

Die vorbereitete Latexlösung (40 ml) wurde in den Reaktor gesaugt und dann unter Rühren auf die gewünschte Temperatur erwärmt.

Bei Erreichen der gewünschten Temperatur wurde der Reaktor mit 10 bar Wasserstoff beauf schlagt, welcher kontinuierlich nachdosiert wurde. Es wurde 3 h bei 70°C gerührt (150 UpM), abgekühlt und mit 5 bar Stickstoff auf einen Gesamtdruck von 15 bar verdünnt. Anschließend wurde innerhalb von 0.5 h in ein Stickstoffstrom von 12 m²/h entspannt. Nun wurde mit 3 bar Stickstoff beaufschlagt und entspannt. Dieser Vorgang wurde 2 mal wiederholt und der Latex dann entnommen.

### Beispiel 3.1: Entfernung des Nickelkolloids aus saurem Polymerlatex und Aufarbeitung des Polymers

Die Oxidation des elementaren Nickels im NBR-Latex gelangt durch Zugabe von Zitronensäure in Gegenwart von Luftsauerstoff. Der Latex wurde innerhalb von 0.5 h bei einer Zitronensäurekonzentration von 0.5 g/ml mit Luftsauerstoff versetzt, wobei ein weißer Latex erhalten wurde. Bei Verwendung einer geringeren Zitronensäurekonzentration (0.02g/ml) dauert es bis zur vollständigen Entfärbung ca. 6 h. Durch Zugabe (Ethanol/Latex = 2:1) von Ethanol mit Alterungsschutzmittel (0.1g BKF® in 100 ml Ethanol) wurde der weiße Latex zur Koagulation gebracht. Anschließend wurde der Kautschuk abgetrennt und mit Wasser gewaschen. Das Polymer wurde im Vakuumtrockenschrank bei 50°C getrocknet und charakterisiert.

### Beispiel 3.2: Entfernung des Nickelkolloids aus basischen Polymerlatex und Aufarbeitung des Polymers

Die Oxidation des elementaren Nickels im NBR-Latex gelangt durch Zugabe von KCN in Gegenwart von Luftsauerstoff. Der Latex wurde innerhalb von 0.5 h bei einer KCN-Konzentration von 0.1 g/ml mit Luftsauerstoff versetzt, wobei ein weißer Latex erhalten wurde. Bei Verwendung einer geringeren KCN-konzentration (0.02 g/ml) dauert es bis zur vollständigen Entfärbung ca. 6 h. Durch Zugabe (Ethanol/Latex = 2:1) von Ethanol mit Alterungsschutzmittel (0.1g BKF® in 100 ml Ethanol) wurde der weiße Latex zur Koagulation gebracht. Anschließend wurde der Kautschuk abgetrennt und mit Wasser gewaschen. Das Polymer wurde im Vakuumtrockenschrank bei 50°C getrocknet und charakterisiert.

**Tabelle: Hydrierung von NBR-Latex mit metallhaltigen Kolloiden.^{a}**

| **Nr.** | **Polymer** | **[M]:(mM)** | **Tₚ(°C)** | **Hydriergrad (mol%)** | **Löslicher Anteil (Gew.%)** | **[η]/(ml/g)** | **M_{w} / 10⁵** |
|---|---|---|---|---|---|---|---|
| * | Perbunan® NT 3445 VP | - | - | - | 99,3 | 146,8 | 1,288 |
| 1 | Perbunan® NT 3445 VP | **[Ni]**: 17,7 Beispiel 1.1 | 65 | 12 | 99,2 | 180,6 | 2,111 |
| 2 | Perbunan® NT 3445 VP | **[Ni]**: 35,3 Beispiel 1.1 | 65 | 13 | 57,2 | 121,5 | n.a. |
| 3** | Perbunan® NT 3445 VP | **[Ni]**: 17,7 Beispiel 1.2 | 65 | 0 | 37,3 | 82,8 | n.a. |
| 4** | Blindversuch | | 65 | 0 | 99,5 | 153,0 | |

| | | | | | | | |
|---|---|---|---|---|---|---|---|
| a) Bedingungen: 40 ml, 19,27 Gew.-% Perbunan® NT 3445 VP; AN-Gehalt 24 Gew.-%, pH 5 (HCl) bzw. pH 14, ca. 5 Gew.-% Mersolat bezogen auf Festkautschuk; 20 ml Wasser; Hydrierdauer: 3 h; H₂: 10 bar; löslicher Anteil und [η] in THF; Hydriergrad aus ¹H-NMR-Spektren in CDCl3 (400 MHz) bestimmt.* Ausgangsprodukt; ** Vergleich. | | | | | | | |

## Patentansprüche

1. Verfahren zur Hydrierung von Doppelbindungen-enthaltenden, ungesättigten Polymeren, **dadurch gekennzeichnet, dass** man zunächst in Gegenwart eines in Latex-Form vorliegenden ungesättigten Polymeren ein metallhaltiges Kolloid unter reduzierenden Bedingungen herstellt, anschließend das erhaltene kolloidhaltige Latex-Gemisch hydriert, danach das metallhaltige Kolloid vom Latex abtrennt und den erhaltenen Latex des Polymeren isoliert, **dadurch gekennzeichnet, dass** der pH-Wert bei der Herstellung des metallhaltigen Kolloids im Bereich 3 bis 6 liegt.

2. Verfahren nach Anspruch 1, **dadurch gekennzeichnet, dass** man als Doppelbindungen-enthaltende, ungesättigte Polymere solche einsetzt, die aufgebaut sind aus konjugierten Dienen oder aus 1 bis 5 Gew.-% an konjugierten Dienen und 95 bis 99 Gew.-% an ungesättigten, Vinylgruppen-enthaltenden Monomeren.

3. Verfahren nach Ansprüchen 1 und 2, **dadurch gekennzeichnet, dass** die Konzentration des zu hydrierenden Polymer-Latex 1 bis 50 Gew.-%, bezogen auf die wässrige Emulsion, beträgt.

4. Verfahren nach Ansprüchen 1 bis 3, **dadurch gekennzeichnet, dass** man zur Herstellung des metallhaltigen Kolloids Metallsalze oder Metallkomplexe einsetzt, die auf Metalle der Gruppe VIIIB des Periodensystems der Elemente (Mendelejew) beruhen, insbesondere auf die Metalle der Gruppe 10 (IUPAC) sowie auf Ruthenium oder Rhodium.

5. Verfahren nach Ansprüchen 1 bis 4, **dadurch gekennzeichnet, dass** man die Hydrierung des kolloidhaltigen Latexgemisches bei Wasserstoffdrucken im Bereich von 0,1 bis 100 bar und bei Temperaturen im Bereich von 25 bis 100°C durchführt.

## Claims

1. Method for the hydrogenation of unsaturated polymers containing double bonds, **characterized in that** a metal-containing colloid is first prepared under reducing conditions in the presence of an unsaturated polymer present in latex form, the colloid-containing latex mixture obtained is then hydrogenated, the metal-containing colloid is then separated from the latex and the polymer latex obtained is isolated, **characterized in that** the pH during the preparation of the metal-containing colloid is in the range from 3 to 6.

2. Method according to Claim 1, **characterized in that** unsaturated polymers containing double bonds which are used are those which are composed of conjugated dienes or of from 1 to 5% by weight of conjugated dienes and from 95 to 99% by weight of unsaturated monomers containing vinyl groups.

3. Method according to Claims 1 and 2, **characterized in that** the concentration of the polymer latex to be hydrogenated is from 1 to 50% by weight, based on the aqueous emulsion.

4. Method according to any of Claims 1 to 3, **characterized in that** metal salts or metal complexes which are based on metals of group VIIIB of the Periodic Table of the Elements (Mendeleev), in particular on the metals of group 10 (IUPAC) and on ruthenium or rhodium are used for the preparation of the metal-containing colloid.

5. Method according to any of Claims 1 to 4, **characterized in that** the hydrogenation of the colloid-containing latex mixture is carried out at hydrogen pressures in the range of from 0.1 to 100 bar and at temperatures in the range of from 25 to 100°C.

## Revendications

1. Procédé d'hydrogénation de polymères insaturés contenant des doubles liaisons, **caractérisé en ce qu'**un colloïde contenant des métaux est tout d'abord fabriqué en conditions réductrices en présence d'un polymère insaturé présent sous la forme d'un latex, puis le mélange de latex contenant un colloïde obtenu est hydrogéné, puis le colloïde contenant des métaux est séparé du latex et le latex du polymère obtenu est isolé, **caractérisé en ce que** le pH lors de la fabrication du colloïde contenant des métaux se situe dans la plage allant de 3 à 6.

2. Procédé selon la revendication 1, **caractérisé en ce que** des polymères insaturés contenant des doubles liaisons qui sont formés à partir de diènes conjugués ou à partir de 1 à 5 % en poids de diènes conjugués et 95 à 99 % en poids de monomères insaturés contenant des groupes vinyle sont utilisés en tant que polymères insaturés contenant des doubles liaisons.

3. Procédé selon les revendications 1 et 2, **caractérisé en ce que** la concentration du latex de polymère à hydrogéner est de 1 à 50 % en poids, par rapport à l'émulsion aqueuse.

4. Procédé selon les revendications 1 à 3, **caractérisé en ce que** des sels métalliques ou des complexes métalliques à base de métaux du groupe VIIIB du tableau périodique des éléments (Mendeleïev), notamment à base de métaux du groupe 10 (IUPAC), ainsi que de ruthénium ou de rhodium, sont utilisés pour la fabrication du colloïde contenant des métaux.

5. Procédé selon les revendications 1 à 4, **caractérisé en ce que** l'hydrogénation du mélange de latex contenant un colloïde est réalisée à des pressions d'hydrogène dans la plage allant de 0,1 à 100 bar et à des températures dans la plage allant de 25 à 100 °C.
